# EUROPÄISCHE PATENTSCHRIFT

(11) **EP 0 585 708 B1**
(45) Veröffentlichungstag und Bekanntmachung des Hinweises auf die Patenterteilung: **13.05.1998**
(21) Anmeldenummer: 93113086.8
(22) Anmeldetag: 16.08.1993
(51) Int. Cl.: B23K 35/30

(54) **Verwendung einer kadmiumfreien Silberlegierung als Hartlot**
Use of silver alloys as cadmium-free brazing filler
Utilisation d'alliages à base d'argent pour matériau de brasage exempt de cadmium

(30) Priorität: 02.09.1992 DE 4229189; 07.05.1993 DE 4315189
(43) Veröffentlichungstag der Anmeldung: 09.03.1994
(73) Patentinhaber: Degussa Aktiengesellschaft, 60311 Frankfurt (DE)
(72) Erfinder: Weise, Wolfgang, Dr., D-60318 Frankfurt (DE); Völcker, Alexander, Dr., D-63517 Rodenbach (DE); Kaufmann, Dieter, D-63633 Birstein (DE); Malikowski, Willi, D-63739 Aschaffenburg (DE); Beuers, Jörg, Dr., D-63571 Gelnhausen 2 (DE); Krappitz, Harald, Dr., D-63457 Hanau 9 (DE)

(56) Entgegenhaltungen:
- EP-A- 0 173 806
- DE-A- 3 315 498
- DE-B- 1 234 397
- US-A- 4 052 531
- CHEMICAL ABSTRACTS, vol. 83, no. 4, 28. Juli 1975, Columbus, Ohio, US; abstract no. 32204z, 'Solder for electrovacuum apparatus units; & SU-A-450 673 (P.E.KOVALESKII ET AL) 25. November 1974

## Beschreibung

Die Erfindung betrifft die Verwendung von kadmiumfreien Silberlegierungen als Hartlot, insbesondere als Universalhartlot für den Einsatz mit Flußmitteln an Luft.

Unter Hartloten versteht man zum Löten geeignete Metallegierungen mit Arbeitstemperaturen von mehr als 450^{o} C. Sie bestehen oft aus Silber mit Zusätzen von Kupfer, Zink und Kadmium.

Es sind allerdings bis heute keine praktisch verwendbaren Universalhartlote für den Einsatz mit Flußmitteln oder unter Vakuum bzw. Schutzgas bekannt, deren Arbeitstemperatur unterhalb 600^{o} C liegt. Je geringer jedoch die Arbeitstemperatur ist, in desto geringerem Ausmaß werden beim Lötvorgang durch das Erhitzen auf diese Temperatur die mechanischen Eigenschaften der zu verbindenden Werkstücke geschädigt. Gleichzeitig wird auch der Energiebedarf verringert. Es ist also wichtig, Hartlote zur Verfügung zu haben, deren Arbeitstemperatur möglichst niedrig liegt.

Hartlote mit Arbeitstemperaturen zwischen 600 und 700^{o} C bestehen überwiegend aus Legierungen der Metalle Silber, Kupfer, Zinn, Zink und Kadmium. Es ist aber bekannt,
daß Kadmium und seine leicht flüchtigen Oxide toxisch wirken können, wenn sie vom menschlichen Körper aufgenommen werden. Diese Inkorporation läßt sich bei nicht sachgemäßem Löten mit kadmiumhaltigen Loten nicht immer vollständig ausschalten, so daß die Gefahr von Vergiftungserscheinungen bestehen kann. Dadurch stellt sich die Forderung, den Kadmiumgehalt in Hartloten stark zu verringern bzw. die Hartlotlegierungen frei von Kadmium zu halten.

In den meisten der bisher verwendeten Hartlotlegierungen mit Arbeitstemperaturen zwischen 600 und 700^{o} C ist zur Erzielung dieser niedrigen Temperaturen ein mehr oder weniger großer Kadmiumgehalt nötig. Bisher bekannte kadmiumfreie Hartlote weisen gegenüber kadmiumhaltigen Loten Arbeitstemperaturen auf, die um 80 bis 120^{o} C höher liegen, was bei temperaturempfindlichen Werkstoffen nicht tragbar ist. Hartlotlegierungen aus Silber-Kupfer-Zinn mit hohen Zinnanteilen besitzen zwar niedrige Arbeitstemperaturen, sind aber sehr spröde und nicht zu Formteilen verarbeitbar.

Aus der DE-AS 24 17 060 ist eine kadmiumfreie Hartlotlegierung auf Silberbasis bekannt, die 40 bis 50 Gew. % Silber, 15 bis 38 Gew. % Kupfer, 22 bis 32 Gew. % Zink, 1 bis 6 Gew. % Zinn und 0,5 bis 3 Gew. % Indium enthält. Die Arbeitstemperaturen dieser Hartlote liegen zwischen 710 und 630^{o} C, was für verschiedene Anwendungsfälle aber noch zu hoch ist.

Die DE-OS 33 15 498 beschreibt Schichtverbundkontaktstücke für Schwachstromkontakte, bei denen die Lotschicht aus einer Silber-Kupfer-Gallium-Legierung besteht. Sie enthält 60 bis 75 Gew.% Silber, 18 bis 35 Gew.% Kupfer und 5 bis 8 Gew.% Gallium, wobei die letztere Komponente auch durch 4 bis 7 Gew.% Gallium plus 1 bis 4 Gew.% Indium, oder durch 1 bis 4 Gew.% Gallium und 3 bis 7 Gew.% Zinn ersetzt sein kann. Schmelzpunkte werden für diese Lote nicht angegeben. Sie liegen jedoch oberhalb 650^{o} C.

Aus der SU-PS 450 673 (Derwent Abstr. 75-65066W7/39) sind Lote mit 50 bis 65 Gew.% Silber, 5 bis 41 Gew.% Kupfer, 3 bis 12 Gew.% Gallium und 6 bis 18 Gew.% Indium bekannt. Ihr Schmelzpunkt liegt bei 640 bis 680^{o} C.

Die DE-OS 27 45 409 beschreibt Hartlotlegierungen mit 50 bis 70 Gew.% Silber, 15 bis 30 Gew.% Kupfer, 8 bis 20 Gew.% Zink und 0,1 bis 8 Gew.% Gallium und/oder Indium. Ihr Schmelzpunkt liegt zwischen 650 und 680^{o}C.

Durch Erhöhung des Galliumgehaltes lassen sich die Schmelzpunkte dieser Legierungen noch weiter herabsetzen. Allerdings sind Silber-Kupfer-Legierungen mit mehr als 8 Gew.% Gallium schwer verformbar und können nicht mehr zu Halbzeug verarbeitet werden.

Es war daher Aufgabe der vorliegenden Erfindung, kadmiumfreie Hartlotlegierungen auf Silberbasis zu entwickeln, die eine möglichst niedrige Arbeitstemperatur von weniger als 630^{o} C besitzen, leicht umformbar sind und universell eingesetzt werden können.

Diese Aufgabe wird erfindungsgemäß durch die Verwendung von kadmiumfreieen Silberlegierungen bestehend aus 45 bis 80 Gew. % Silber, 14 bis 25 Gew. % Kupfer, 10 bis 25 Gew. % Gallium, 1 bis 7 Gew. % Zink und 0 bis 5 Gew. % Indium und/oder Zinn gelöst.

Vorzugsweise verwendet man Legierungen aus 62 bis 72 Gew. % Silber, 14 bis 18 Gew. % Kupfer, 12 bis 24 Gew. % Gallium und 2 bis 6 Gew.% Zink. Besonders bewährt haben sich Legierungen aus 65 bis 70 Gew. % Silber, 15 bis 18 Gew. % Kupfer, 15 bis 22 Gew. % Gallium und 2 bis 6 Gew.% Zink. Zur weiteren Erniedrigung der Arbeitstemperatur und zur Verbesserung der Benetzungseigenschaften können diesen Legierungen Indium und/oder Zinn zugesetzt werden.

Diese Legierungen weisen überraschenderweise Arbeitstemperaturen zwischen 620 und 580^{o} C auf. Sie zeigen eine sehr gute Benetzung auf unterschiedlichen Substraten, wie Kupfer, Nickel, Messing, Eisen-Nickel-Legierungen oder Stahl, sowohl unter Schutzgas als auch nach Einsatz von Flußmitteln an Luft.

Die Legierungen sind überraschenderweise duktil und gut verformbar, so daß sich die unterschiedlichsten Lotformteile daraus herstellen lassen.

Es hat sich überraschenderweise gezeigt, daß die Verarbeitbarkeit von Silber-Kupfer-Galliumlegierungen mit mehr als 10 Gew.% Gallium wesentlich verbessert werden kann, wenn man Zink in Mengen von 1 bis 7 Gew.% zulegiert. Dabei muß der Kupfergehalt aber mindestens 14 Gew.% betragen. Bei Zinkgehalten von mehr als 7 Gew.% verschlechtern sich die Verarbeitungseigenschaften deutlich.

Als Beispiel sind in der folgenden Tabelle für einige erfindungsgemäße Lotlegierungen die Zusammensetzung, und die Arbeitstemperaturen angegeben.

**Tabelle**

| Lotnummer | Legierungszusammensetzung in Gew.% | | | | | | Arbeitstemp. [°C] |
|---|---|---|---|---|---|---|---|
| | Ag | Cu | Ga | Zn | In | Sn | |
| 1 | 68 | 14 | 12 | 6 | - | - | 590 |
| 2 | 58 | 20 | 15 | 7 | - | - | 620 |
| 3 | 62 | 16 | 15 | 7 | - | - | 610 |
| 4 | 64 | 16 | 16 | 4 | - | - | 610 |
| 5 | 65 | 16 | 15 | 3 | - | 1 | 600 |

## Patentansprüche

1. Verwendung einer kadmiumfreien Silberlegierung bestehend aus 45 bis 80 Gew. % Silber, 14 bis 25 Gew. % Kupfer, 10 bis 25 Gew. % Gallium, 1 bis 7 Gew. % Zink und 0 bis 5 Gew. % Indium und/oder Zinn als Hartlot.

2. Verwendung einer kadmiumfreien Silberlegierung nach Anspruch 1,
dadurch gekennzeichnet,
daß sie aus 62 bis 72 Gew. % Silber, 14 bis 18 Gew. % Kupfer, 12 bis 24 Gew. % Gallium und 2 bis 6 Gew.% Zink besteht.

## Claims

1. Use of a cadmium-free silver alloy consisting of 45 to 80 wt.% of silver, 14 to 25 wt.% of copper, 10 to 25 wt.% of gallium, 1 to 7 wt.% of zinc and 0 to 5 wt.% of indium and/or tin as a brazing solder.

2. Use of a cadmium-free silver alloy according to claim 1,
characterised in that
it consists of 62 to 72 wt.% of silver, 14 to 18 wt.% of copper, 12 to 24 wt.% of gallium and 2 to 6 wt.% of zinc.

## Revendications

1. Utilisation d'un alliage d'argent exempt de cadmium, constitué de 45 à 80 % en poids d'argent, de 14 à 25 % en poids de cuivre, de 10 à 25 % en poids de gallium, de 1 à 7 % en poids de zinc et de 0 à 5 % en poids d'indium et/ou d'étain comme matériau de brasage.

2. Utilisation d'un alliage d'argent exempt de cadmium selon la revendication 1,
caractérisé en ce qu'
il se compose de 62 à 72 % en poids d'argent, 14 à 18 % en poids de cuivre, 12 à 24 % en poids de gallium et 2 à 6 % en poids de zinc.
